# EUROPEAN PATENT APPLICATION

(11) **EP 4 496 053 A1**
(43) Date of publication of application: **22.01.2025**
(21) Application number: 23898145.0
(22) Date of filing: 14.11.2023
(51) Int. Cl.: H01M 10/04, H01M 10/058, H01M 10/44, B66F 9/07, B66F 9/08, B66F 9/075

(54) **AGING SYSTEM**

(30) Priority: 28.11.2022 KR 20220161390
(71) Applicant: LG Energy Solution, Ltd., Seoul 07335 (KR)
(72) Inventor: KIM, Do Hyoung, Daejeon 34122 (KR); KIM, Ju Hee, Daejeon 34122 (KR); KIM, Ki Woong, Daejeon 34122 (KR); GU, Dae Geun, Daejeon 34122 (KR)
(74) Representative: Plasseraud IP
(86) International application number: PCT/KR2023/018221
(87) International publication number: WO 2024/117613

(57) **Abstract**

Disclosed herein relates to an aging system for aging a plurality of cells, including: a plurality of chambers comprising multiple levels, each of the levels housing a cell; and a crane unit provided adjacent to the chamber, for transporting and delivering cells to each level of the chamber; and the crane unit includes: an upper frame; a lower frame; a pair of masts connecting the upper and lower frames; and a lifting unit coupled to the mast so as to be lifted up and down by being guided by mast, wherein the crane unit further includes at least one air conditioning fan that blows wind to circulate air so that the temperature distribution of each cell housed in the chamber is uniform.

## Description

### [Technical Field]

The present invention relates to an aging system for aging a plurality of cells. More particularly, the present invention relates to an aging system that is adjustable to minimize the temperature variation of each cell during aging of a plurality of cells that is housed.

This application claims the benefit of priority from Korean Patent Application No. 10-2022-0161390, filed on November 28, 2022, the disclosure of which is incorporated herein by reference in its entirety.

### [Background Technology of the Invention]

As the demand for high-performance mobile devices increases, the need to improve the performance of secondary batteries is growing rapidly.

In particular, medium or large devices such as notebook computers, portable DVDs, small PCs, electric vehicles, hybrid electric vehicles, etc. require the use of battery modules including multiple battery cells for power and capacity reasons.

Battery modules are manufactured by assembling the battery cells and activating the batteries, where the battery cells are mounted in a predetermined jig and charged to the conditions required for activation. Conventional secondary batteries, such as nickel-cadmium batteries and lead-acid batteries, can be used immediately after production, so charging and discharging devices were only needed for performance evaluation. However, for lithium secondary batteries, such as lithium-ion batteries and lithium polymer batteries, which are widely used in recent years, the performance of the battery is completed only after the battery is subjected to a predetermined charging and discharging process, i.e., the chemical process, so charging and discharging devices have become essential equipment in the production line of secondary batteries.

During the production process of a secondary battery, the charge and discharge device performs the function of giving the secondary battery its characteristics by repeating the charging and discharging process several times so that the primary battery that has been assembled can store electrical energy. As the supply of secondary batteries has increased in response to the rapidly increasing demand for secondary batteries, it has become necessary to efficiently control the charging and discharging devices that perform the charging and discharging functions during the production stage of secondary batteries.

After the battery cells have been processed in these charging and discharging devices, they are moved to the next process by a stacker crane that carries a tray for loading the battery cells.

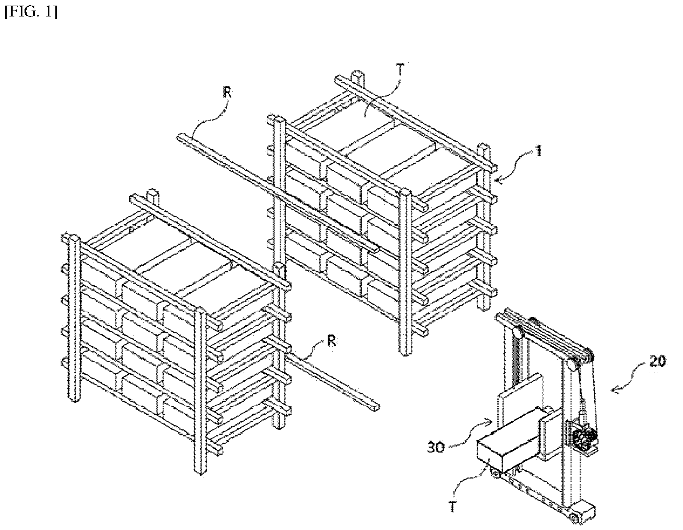

FIG. 1 shows a stacker crane 20 for moving a tray T and a chamber 1 in which trays T carried by the stacker crane 20 are loaded, the stacker crane 20 being equipped for horizontal movement along guide rails R located side by side at upper and lower parts, respectively, as shown in FIG. 1, elevating the elevating unit 30, on which the trays T are seated, up and down to deliver and load the trays T to the respective ends of the chamber 1 for which they are intended, or, conversely, to retrieve the loaded trays T.

As described above, the tray T loaded in the chamber 1 and the battery cells included in the tray T may be subjected to aging at various temperature conditions.

However, the commonly used chambers 1 have a huge size, and since each of the chambers 1 is loaded with a myriad of trays T, the problem of unequal temperatures in different zones may arise. That is, each tray T and battery cell is aged under unequal temperature conditions, resulting in the possibility of not obtaining a standardized battery cell.

### [Prior Art Document]

Korean Patent Publication No. 10-2015-0026521
Korean Patent Publication No. 10-1998-0040131

### [Description of the Invention]

### [Technical Problem]

Accordingly, the present invention was invented to solve the above problems, and aims to minimize the temperature variation between the chambers in which each cell is housed during the aging process of a plurality of cells, thereby homogenizing the performance and quality of each cell.

Other objects and advantages of the present invention will be understood from the following description, and will become more apparent from the embodiments of the present invention. It will also be readily apparent that the objects and advantages of the present invention may be realized by the means and combinations thereof disclosed in the patent claims.

### [Technical Solution]

According to the present invention, the present invention provides an aging system for aging a plurality of cells, including: a plurality of chambers comprising multiple levels, each of the levels housing a cell; and a crane unit provided adjacent to the chamber, for transporting and delivering cells to each level of the chamber; and the crane unit includes: an upper frame; a lower frame; a pair of masts connecting the upper and lower frames; and a lifting unit coupled to the mast so as to be lifted up and down by being guided by mast, wherein the crane unit further includes at least one air conditioning fan that blows wind to circulate air so that the temperature distribution of each cell housed in the chamber is uniform.

The air conditioning fan is provided on the mast to blow wind in a horizontal direction.

The single mast is coupled to a plurality of air conditioning fans, and the air conditioning fan may be provided at predetermined distance spaced along the mast.

The lifting unit includes: a base plate; and a support wall coupled to both sides of the base plate and slidably coupled to the mast, and the air conditioning fan may be provided by being coupled to both ends of the support wall.

The air conditioning fan may be coupled to a pair of support walls coupled to both sides of the base plate.

The air conditioning fan may be coupled to the upper frame.

The air conditioning fan may be coupled to the upper frame so as to be perpendicular to the extending direction of the mast to blow wind in an upward and downward direction.

The air conditioning fan may be coupled to the upper frame so as to be horizontal to the extending direction of the mast to blow wind in a horizontal direction.

The crane unit may be horizontally movable to transport and deliver cells to the respective chambers.

Between the neighboring chambers includes a guide rail extending therebetween to pass between the chambers, wherein the crane unit may be slidably coupled to the guide rail.

The chamber may further include a heating unit for applying heat to each of the cells housed therein.

### [Advantageous Effects]

According to the present invention, during the process of aging a plurality of cells, the temperature deviation between the chambers in which each cell is housed can be minimized to homogenize the performance and quality of each cell, thereby improving the efficiency and yield of the cell activation process, thereby reducing the cost of the cells.

### [Brief Description of the Diagrams]

FIG. 1 illustrates a conventional aging system.
FIG. 2 illustrates an aging system according to a first embodiment of the present invention.
FIG. 3 is a perspective view of a crane unit according to a first embodiment of the present invention.
FIG. 4 is a side view of the crane unit of FIG. 3.
FIG. 5 illustrates the movement of a crane unit moving between chambers and the resulting movement of air.
FIG. 6 illustrates a modified example of a crane unit included in an aging system according to a first embodiment of the present invention.
FIG. 7 is a simplified side view of the crane unit of FIG. 6.
FIG. 8 illustrates an aging system according to a second embodiment of the present invention.
FIG. 9 illustrates a side view of a crane unit included in an aging system according to a second embodiment.
FIG. 10 is a perspective view of a crane unit included in an aging system according to a third embodiment of the present invention.
FIG. 11 is a side view of the crane unit of FIG. 10.
FIG. 12 illustrates a modified example of a crane unit included in an aging system according to a third embodiment of the invention.

### [Best Mode for Carrying out the Invention]

Hereinafter, the preferred embodiments of the present invention will be described in detail with reference to the attached drawings. Prior to this, the terms and words used in this specification and claims should not be construed in a limited or merely dictionary sense, but should be interpreted according to the meaning and concept consistent with the technical spirit of the present invention, based on the principle that the inventor is entitled to define terms in a way that best describes his invention.

Therefore, it should be understood that the embodiments described in this specification and the configurations illustrated in the drawings are merely the most preferred embodiments of the present invention and do not represent all the technical spirit of the present invention, so it should be understood that various equivalents and modifications that could substitute for these embodiments may exist at the time of filing this application.

Furthermore, in describing the present invention, specific descriptions of relevant disclosed configurations or features are omitted where it is believed that such detailed description would obscure the essence of the present invention.

Since the embodiments of the present invention are provided to more fully illustrate the invention to those of ordinary skill in the art, the shapes and sizes of the components in the drawings may be exaggerated, omitted, or shown schematically for clarity. Accordingly, the size or proportions of each component are not necessarily indicative of its actual size or proportions.

The present invention relates to an aging system for aging a plurality of cells, characterized in that the aging system applies an air conditioning fan 250 to a crane unit 200 that moves between each chamber 100 in which cells are housed to minimize the temperature variation of each cell during aging of the plurality of cells.

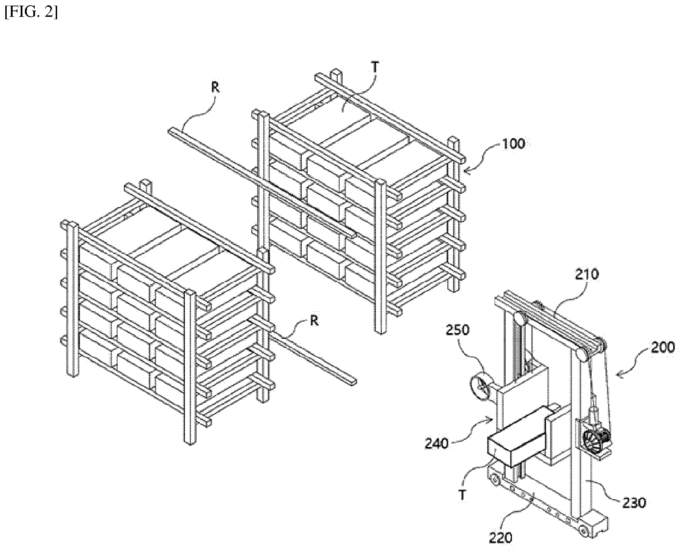

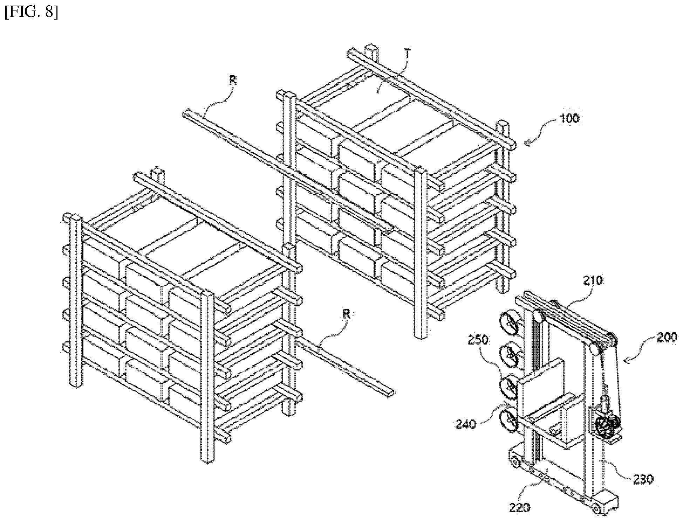

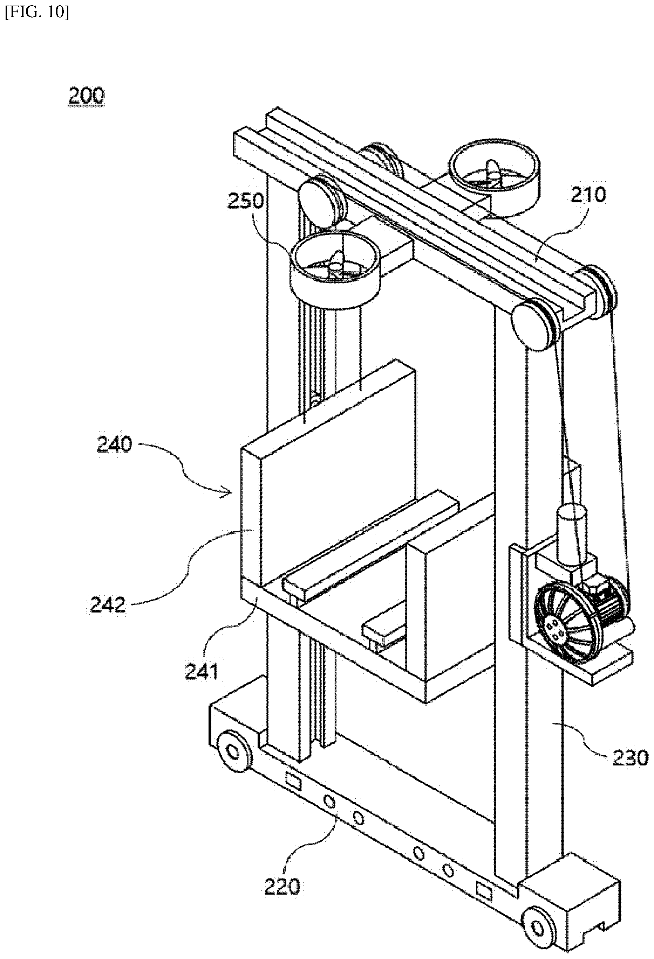

FIGS. 2 through 7 illustrate an aging system according to a first embodiment of the present invention, FIGS. 8 through 9 illustrate an aging system according to a second embodiment of the present invention, and FIGS. 10 through 12 illustrate an aging system according to a third embodiment of the present invention.

Hereinafter, the aging system of the present invention will be described by each form with reference to the following drawings.

The cell manufacturing process consists of electrode manufacturing, assembly, activation, and packaging/shipping. Among these, the activation process is a process in which cells that have passed through the assembly process are stored for a certain period of time to age, and then charged/discharged again to improve cell performance. This activation process can be performed through a chamber 100 comprising a plurality of levels as shown in FIG. 1. One level of the chamber 100 may be seated with a plurality of trays including cells housed side-by-side in a transverse direction.

The trays to be loaded into each of the chambers 100 are transferred by a crane unit 200. In other words, the crane unit 200, upon reaching a certain position, operates a lifting unit 240 to deliver the tray being transported to a certain level of the chamber 100.

The tray may house a plurality of cells, each of the cells being in electrical connection with the tray.

The chamber 100 may have a structure that is electrically connected to the tray to allow charging and discharging of each of the cells housed in the tray.

### (First embodiment)

FIG. 2 illustrates an aging system according to a first embodiment of the present invention.

The aging system of the present invention includes a chamber 100 and a crane unit 200, as shown in FIG. 2.

The aging system of the present invention includes at least one or more chambers 100, each of the chambers 100 being spaced apart at predetermined distance to allow a crane unit 200 to be moved and passed between them.

Each of the chambers 100 may include multiple levels, as shown in FIG. 2, wherein each level may be seated with a plurality of trays including cells side by side.

Between each of the chambers 100 may be installed a guide rail R, as shown, the guide rail R extending between a pair of opposing and neighboring chambers 100.

A crane unit 200 may be guided along the guide rails R between the respective chambers 100.

The guide rail R may be formed to be coupled to at least one of the upper and lower parts of the crane unit 200.

The aging system of the present invention includes a pair of guide rails R coupled to both the upper and lower parts of the crane unit 200 so as to stably support and guide the crane unit 200. In this case, the pair of guide rails R is level with each other with respect to the up and down directions.

The crane unit 200 is coupled to the guide rail R to be able to slide, so that it can be moved along the direction in which the guide rail R extends.

The chamber 100 may further include a tray housed in each level and a heating unit (not shown) for applying heat to the plurality of cells included in the tray.

In order to express the above cell performance, the cell should be left for a certain period of time at a high temperature, which requires a heating unit to create a high temperature environment.

The type of heating unit need not be particularly limited, and any device capable of delivering heat to each tray and cell via radiation can be used.

Because each of the chambers 100 included in the aging system of the present invention may be closely spaced, air circulation in the area where the chambers 100 are located may be poor. This may in turn cause heat to be unevenly transferred from zone to zone, making it impossible to keep the cells in the same environment. Thus, a plurality of cells that are not aged in the same environment may exhibit significant differences in cell performance.

The aging system of the present invention is characterized in that it controls a crane unit 200, which is a device for transporting trays containing cells to and from these chambers 100, to induce air circulation between the chambers 100 to minimize deviations in temperature in each chamber 100 or for each tray.

The crane unit 200 is provided adjacent to the chamber 100 and serves to transport and deliver cells to each level of the chamber 100.

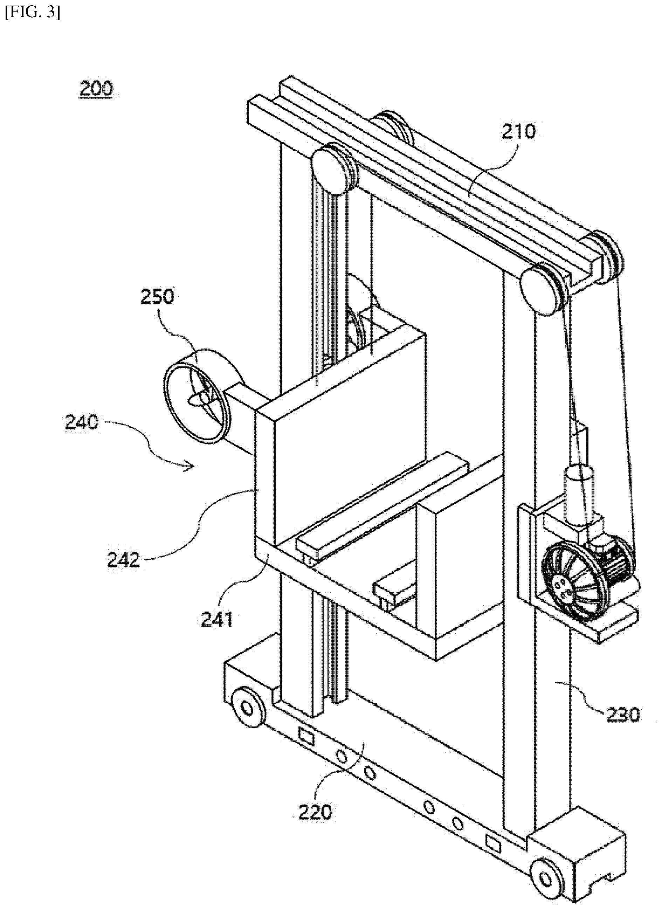

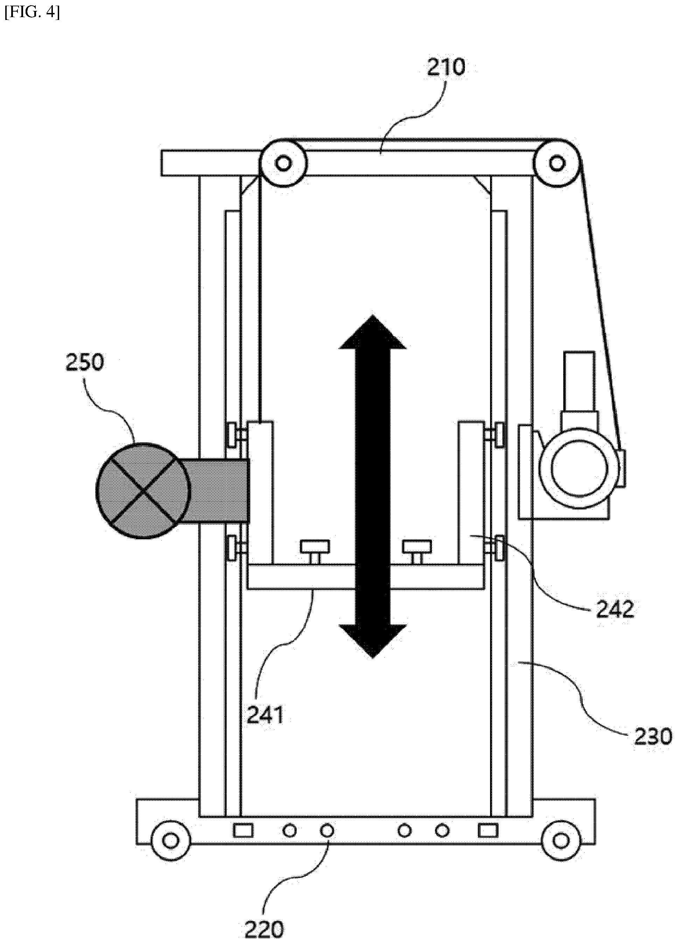

FIG. 3 is a perspective view of a crane unit 200 according to a first embodiment of the present invention, and FIG. 4 is a simplified side view of the crane unit 200 of FIG. 3.

The crane unit 200 includes an upper frame 210, a lower frame 220, a pair of masts 230 connecting the upper frame 210 and the lower frame 220, and a lifting unit 240 coupled to the mast so as to be lifted up and down by being guided by mast, as shown in FIGS. 3 and 4.

The upper frame 210 is coupled to a guide rail R located at an upper part of the crane unit 200 to be able to slide, and the lower frame 220 is coupled to a guide rail R located at a lower part of the crane unit 200 to be able to slide.

The pair of masts 230 are coupled to connect two ends of the upper frame 210 and lower frame 220, respectively.

One side of the mast 230 may be coupled with a driving device capable of driving the lifting unit 240 to be lifted.

The lifting unit 240 serves to seat the tray including the cells, and to move the corresponding tray up and down to deliver it to each level of the chamber 100.

The lifting unit 240 and the driving device may be connected by a wire. When the wire is wound by operation of the driving device, the lifting unit 240 moves upwardly, and when the wire is unwound, the lifting unit 240 moves downwardly.

The lifting unit 240 is slidably coupled to the inner surface of a pair of masts 230 in which both sides are spaced apart by a predetermined distance.

The lifting unit 240 may be capable of reciprocating up and down lifting movement along the mast 230, as shown in FIG. 4. In this case, the inner surface of the mast 230 may include a separate lifting rail along which the lifting unit 240 slides, and the lifting unit 240 is coupled to the lifting rail included in the mast 230 to be able to slide.

The lifting unit 240 includes a base plate 241 supporting a lower part of the tray, as shown, and a support wall 242 coupled to both sides of the base plate 241 and coupled to the mast 230, as shown, to be able to slide with respect to the mast 230.

The support wall 242 is supported and directly coupled to the lifting rails included in the inner surface of the mast 230 and serves to support and protect both sides of the tray seated on the base plate 241.

The crane unit 200 included in the aging system of the present invention is characterized in that it further includes at least one air conditioning fan 250, which blows wind to circulate air so that the temperature distribution of each cell housed in the chamber 100 is homogenized.

The fan included in the air conditioning fan 250 is formed to send wind in one direction.

The aging system according to the first embodiment of the present invention is characterized in that the air conditioning fan 250 is coupled to the support wall 242 of the crane.

Specifically, the crane unit 200 is configured with a pair of air conditioning fans 250 facing each other at either end of the support wall 242.

Each of the pair of air conditioning fans 250 is preferably provided to blow wind in an outward direction relative to the crane unit 200.

An air conditioning fan 250 coupled to the lifting unit 240 may blow wind while traveling up and down along the lifting unit 240, as shown in FIG. 4.

The crane unit 200 moves between the chambers 100 along the guide rails R, with the air conditioning fan 250 configured as described above, to blow wind into each chamber 100.

More specifically, the crane unit 200 moves in a horizontal direction along the guide rails R and blows wind into each of the chambers 100 and between the chambers 100 with the air conditioning fan 250. Furthermore, the crane unit 200 can blow wind up and down each of the chambers 100, for example from the level located at the uppermost part of the chamber 100 to the level located at the lowermost part, by lifting up and down the lifting unit 240 and the air conditioning fan 250 coupled to the lifting unit 240.

In other words, the air conditioning fan 250 blows wind between the chambers 100 located on either side of the crane unit 200 to induce a convective circulation of air. By inducing this circulation of air, the heat accumulated in a particular part can be spread to the surroundings along the circulation and, consequently, the temperature variation can be reduced between the chambers 100 included in all the zones through which the crane unit 200 travels.

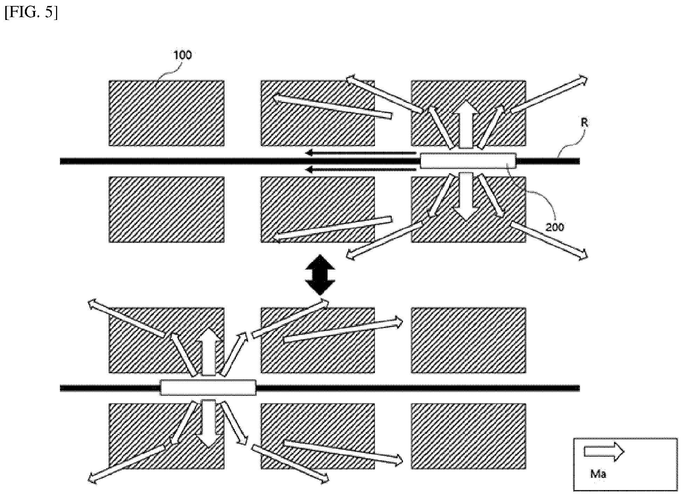

FIG. 5 is a plan view schematically illustrating a portion of the chambers 100 and crane unit 200 included in the aging system of the present invention to simplify the representation of air movement Ma by the crane unit 200 moving between the chambers 100.

Referring to FIG. 5, a guide rail R is formed extending between the plurality of chambers 100 arranged to face each other, and along the guide rail R the crane unit 200 is moved.

The crane unit 200 is moved and at the same time generated wind using the air conditioning fan 250 in both directions, and air circulation Ma is carried out between each chamber 100 by the movement of the crane unit 200 and the operation of the air conditioning fan 250.

Thus, heat that is unevenly distributed to each zone within each chamber 100 or any one chamber 100 may circulate and move to a zone of lower temperature due to the air circulation Ma.

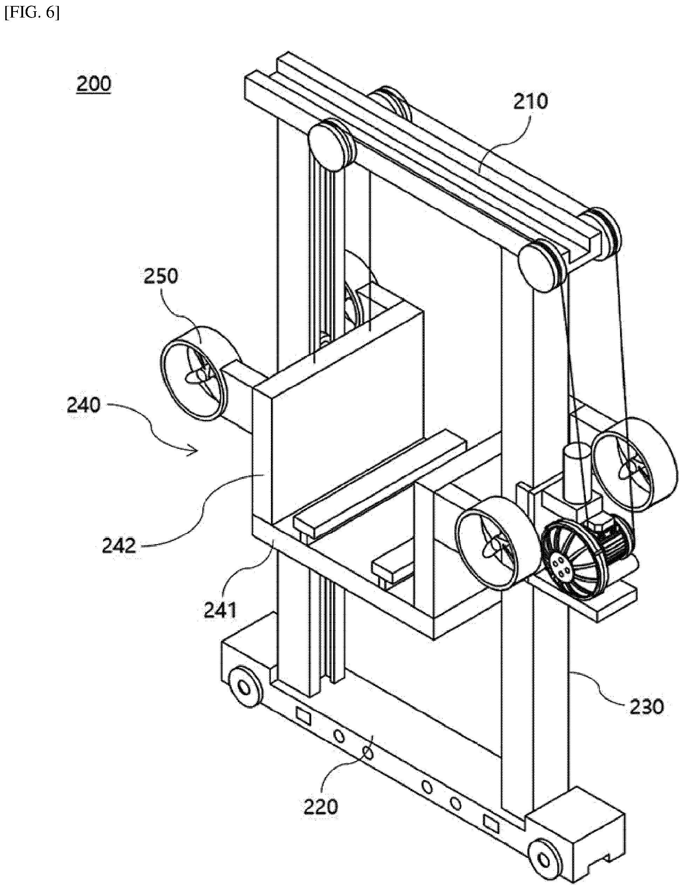

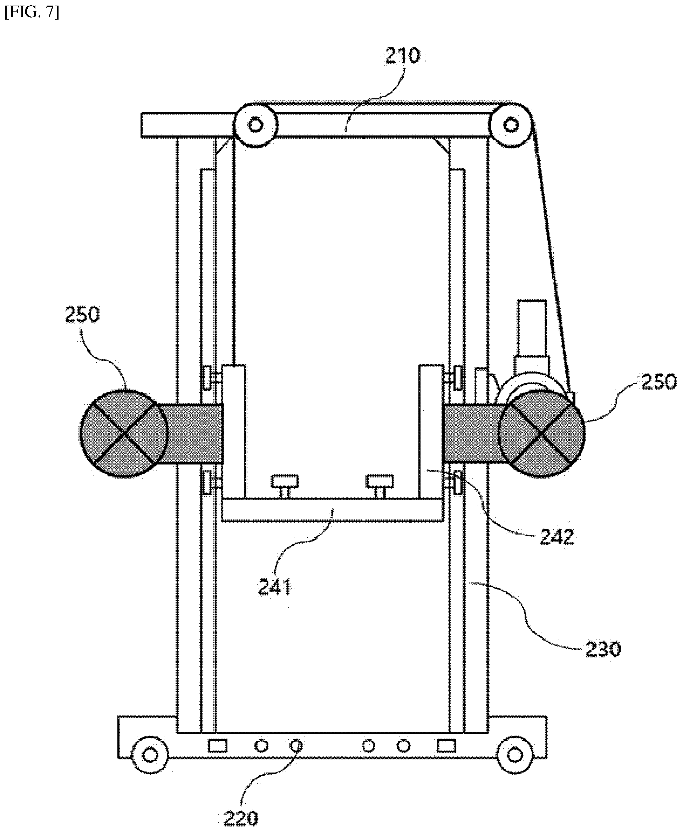

FIG. 6 illustrates a modified example of a crane unit 200 included in an aging system according to a first embodiment of the present invention, and FIG. 7 illustrates a side view of the crane unit 200 of FIG. 6.

The crane unit 200 has an air conditioning fan 250 coupled to each side of the base plate 241 as shown in FIG. 6.

Specifically, each of the air conditioning fans 250 is coupled to a pair of support walls 242 coupled to both sides of the base plate 241. In this case, each of the air conditioning fans 250 is coupled to both ends of each of the support walls 242.

The crane unit 200 of the structure shown in FIGS. 6 and 7 may have air conditioning fans 250 in the front and back, respectively, to more effectively circulate heat and air between each chamber 100 or each tray.

### (Second embodiment)

The aging system according to the second embodiment of the present invention differs from the aging system according to the first embodiment in that the air conditioning fan 250 is fixedly installed on the mast 230, whereas in the first embodiment, the air conditioning fan 250 included in the crane unit 200 is installed on the lifting unit 240, which is lifted up and down.

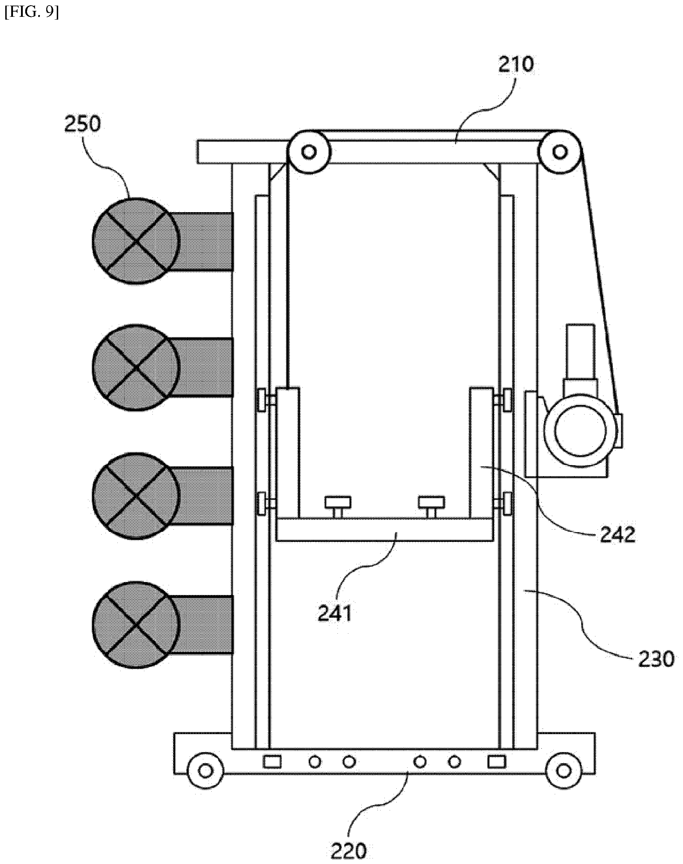

FIG. 8 illustrates an aging system according to a second embodiment of the present invention, and FIG. 9 illustrates a side view of a crane unit 200 included in the aging system according to the second embodiment.

The lifting unit 240 includes a plurality of air conditioning fans 250 coupled side-by-side spaced apart at predetermined distance along the mast 230, as shown in FIGS. 8 and 9.

The air conditioning fan 250 coupled to the mast 230 as described above blows wind in a horizontal direction.

The single mast 230 is coupled to a plurality of air conditioning fans 250, characterized in that the air conditioning fans 250 are spaced at predetermined distance along the mast 230.

In other words, the crane unit 200 of the aging system according to the second embodiment can induce air circulation by blowing wind at all heights even when the lifting unit 240 is not lifted.

The air conditioning fans 250 coupled in turn along the mast 230 are preferably alternately coupled so that the wind direction of neighboring air conditioning fans 250 is opposite to each other.

### (Third embodiment)

The aging system according to the third embodiment of the present invention differs from the aging system according to the first embodiment in that the air conditioning fan 250 is fixedly installed on the upper frame 210, whereas in the first embodiment, the air conditioning fan 250 included in the crane unit 200 is installed on the lifting unit 240, which is lifted up and down.

In other words, the air conditioning fan 250 is coupled to the upper frame 210 so as to be perpendicular to the extending direction of the mast 230 to blow wind in an upward and downward direction.

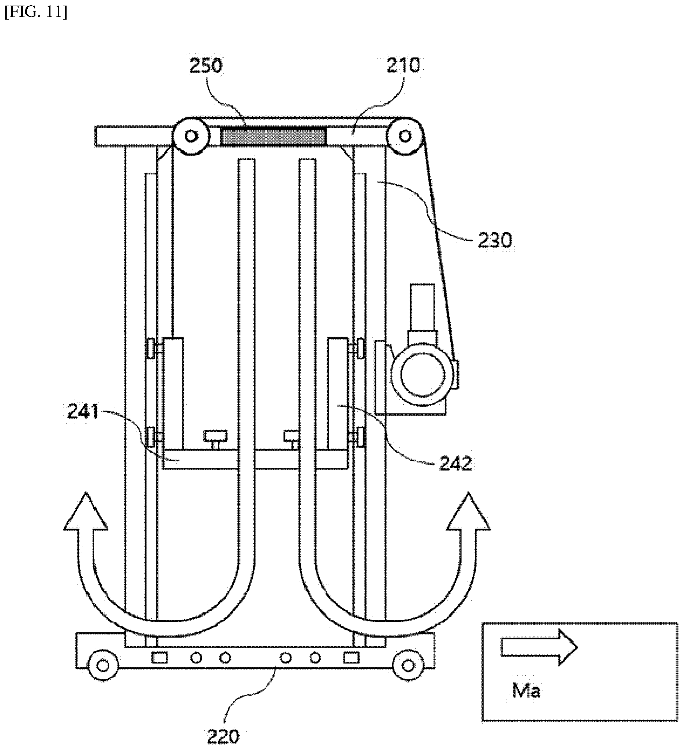

FIG. 10 is a perspective view of a crane unit 200 included in an aging system according to a third embodiment of the present invention, and FIG. 11 is a simplified side view of the crane unit 200 of FIG. 10.

An air conditioning fan 250 coupled to the upper frame 210, as described above, blows wind in an upward or downward direction.

FIG. 11 illustrates an example in which the air conditioning fan 250 is coupled to blow wind downwardly, causing air to be moved downwardly Ma by the air conditioning fans 250 and then spread to the surroundings.

As the crane unit 200 moves horizontally around the chamber 100 along the guide rails R, it can effectively send the heat accumulated at the upper part downward, thereby reducing the up and down temperature variation within the chamber 100.

The air conditioning fan 250 coupled to the upper frame 210 may be coupled to blow wind in a horizontal direction.

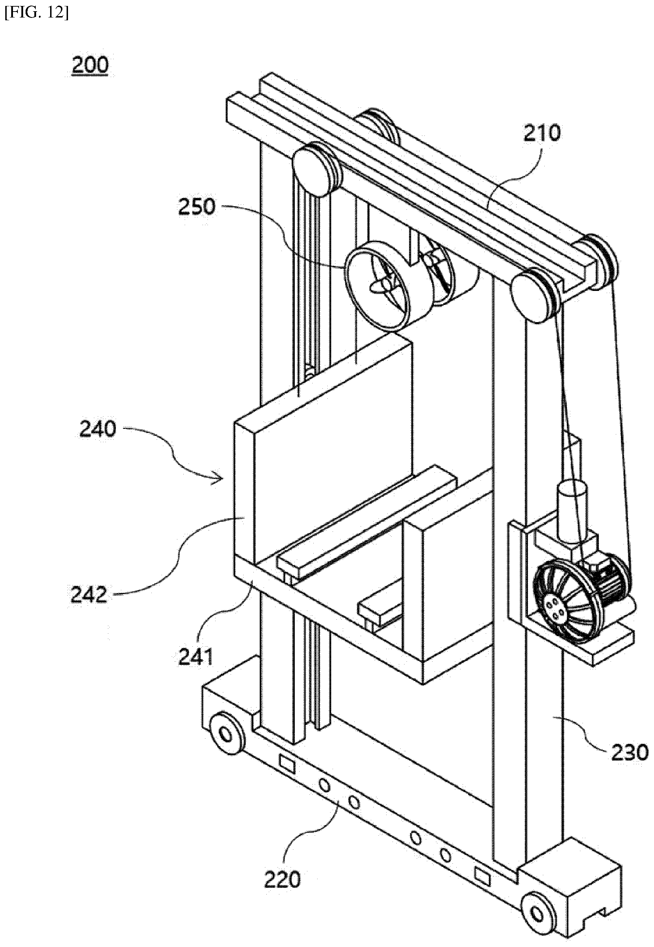

FIG. 12 illustrates a modified example of the crane included in the aging system according to a third embodiment, wherein the air conditioning fan 250 is coupled to the upper frame 210 so as to be horizontal to the extending direction of the mast 230 to blow wind in a horizontal direction. In this case, the crane unit 200 can blow wind only at the upper part of each chamber 100, aiming at the upper part of the chamber 100 so that the heat accumulated in a particular zone can quickly move to the surrounding areas.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various equivalents and modifications that may replace them at the time of filing the present disclosure.

### [Reference numerals]

1: (CONVENTIONAL ART) CHAMBER
20: (CONVENTIONAL ART) STACKER CRANE
30: (CONVENTIONAL ART) ELEVATING UNIT
100: CHAMBER
200: CRANE UNIT
210: UPPER FRAME
220: LOWER FRAME
230: MAST
240: LIFTING UNIT
241: BASE PLATE
242: SUPPORT WALL
250: AIR CONDITIONING FAN
R: GUIDE RAIL
Ma: AIR MOVEMENT(CIRCULATION)

## Claims

1. An aging system for aging a plurality of cells, comprising:
a plurality of chambers comprising multiple levels, each of the levels housing a cell; and
a crane unit provided adjacent to the chamber, for transporting and delivering cells to each level of the chamber; and
the crane unit comprises:
an upper frame;
a lower frame;
a pair of masts connecting the upper and lower frames; and
a lifting unit coupled to the mast so as to be lifted up and down by being guided by mast, wherein
the crane unit further comprises at least one air conditioning fan that blows wind to circulate air so that the temperature distribution of each cell housed in the chamber is uniform.

2. The aging system of claim 1, wherein
the air conditioning fan is provided on the mast to blow wind in a horizontal direction.

3. The aging system of claim 2, wherein
the single mast is coupled to a plurality of air conditioning fans, and
the air conditioning fan is provided at predetermined distance spaced along the mast.

4. The aging system of claim 1, wherein
the lifting unit comprises:
a base plate; and
a support wall coupled to both sides of the base plate and slidably coupled to the mast; and
the air conditioning fan is provided by being coupled to both ends of the support wall.

5. The aging system of claim 4, wherein
the air conditioning fan is coupled to a pair of support walls coupled to both sides of the base plate.

6. The aging system of claim 1, wherein
the air conditioning fan is coupled to the upper frame.

7. The aging system of claim 6, wherein
the air conditioning fan is coupled to the upper frame so as to be perpendicular to the extending direction of the mast to blow wind in an upward and downward direction.

8. The aging system of claim 6, wherein
the air conditioning fan is coupled to the upper frame so as to be horizontal to the extending direction of the mast to blow wind in a horizontal direction.

9. The aging system of claim 1, wherein
the crane unit is horizontally movable to transport and deliver cells to the respective chambers.

10. The aging system of claim 1, wherein
between the neighboring chambers includes a guide rail extending therebetween to pass between the chambers, wherein
the crane unit is slidably coupled to the guide rail.

11. The aging system of claim 1, wherein
the chamber further comprises a heating unit for applying heat to each of the cells housed therein.

12. The aging system of claim 1, wherein
each level of the chamber includes a tray space in which a plurality of trays housing a plurality of cells may be seated side by side, wherein
the tray is seated in the tray space to electrically communicate with the chamber.

13. The aging system of claim 1, wherein
a plurality of cells housed in a tray seated in the tray space is charged and discharged.
